# EUROPEAN PATENT APPLICATION

(11) **EP 4 716 109 A1**
(43) Date of publication of application: **25.03.2026**
(21) Application number: 25201418.8
(22) Date of filing: 10.09.2025
(51) Int. Cl.: H04B 7/06

(54) **BEAM CONTROL DEVICE CAPABLE OF PERFORMING AUTOMATIC BEAM SELECTING MECHANISM**

(30) Priority: 20.09.2024 CN 202411314576
(71) Applicant: Sercomm Corporation, Taipei 115 (TW); Sernet (Suzhou) Technologies Corporation, Suzhou, Jiangsu (CN)
(72) Inventor: CHIANG, Kun-Lin, 114036 Taipei City (TW); CHIU, Ying-Tsung, New Taipei City (TW)
(74) Representative: dompatent

(57) **Abstract**

A beam control device capable of performing an automatic beam selecting mechanism, is used to control a first number of platform-provided beams generated by an antenna array. The platform-provided beams are used to provide communication service to several terminal devices. The beam control device includes a beam classifying unit and a beam type converting unit. The beam classifying unit is used to select a second number of patrol beams from the platform-provided beams, confirm a service status of each patrol beam, and classify the patrol beams into serving beams and non-serving patrol beams according to the service status. The beam type converting unit is used to select at least one of a third number of candidate beams, and convert the selected candidate beam into the type of the patrol beams to replace at least one of the non-serving patrol beams.

## Description

### TECHNICAL FIELD

The present disclosure relates to a control device of a base station in a mobile communication system, and more particularly relates to a beam control device capable of executing an automatic beam selecting mechanism.

### BACKGROUND

With an evolution of mobile communication technology, up-to-date mobile communication systems (e.g., a fourth generation mobile communication system (4G-LTE) or a fifth generation mobile communication system (5G-NR)) often employ a beam-forming mechanism to provide communication service to terminal devices. In the beam-forming technology, a transmission signal generated by an array antenna of a base station is focused in a specific direction to increase signal strength, decrease propagation loss, and reduce interference.

However, due to operational limitations of the mobile communication system platform, the base station cannot use all the beams provided by the platform at the same time. For example, the platform of the mobile communication system may be limited by the reuse of the synchronization signal (PBCH,SSB), and hence the base station can only use a portion of beams provided by the platform at the same time, resulting in a significant reduction in the coverage of the base station.

Since the base station has a limited number of beams which can be used simultaneously, a mobile terminal (i.e., terminal device) to which the base station provides communication service may have difficulty to accurately align with a suitable beam (for example, a suitable beam corresponding to a location and a direction of the mobile terminal). Even worse, there may not be any beam at the location of the mobile terminal that can provide communication service.

In addition, when a base station performs beam switching to adjust its service range, the base station may need to be restarted to make the beam switching effective, which will cause transmission interruption for the terminal device.

In view of the above issues, it is necessary to provide an improved beam controlling mechanism that can automatically select suitable beans for terminal devices at different locations.

### SUMMARY

According to one embodiment of the present disclosure, A beam control device is provided. The beam control device is capable of performing an automatic beam selecting mechanism and used to control a first number of platform-provided beams generated by an antenna array. The platform-provided beams are used to provide communication service to several terminal devices. The beam control device includes a beam classifying unit and a beam type converting unit. The beam classifying unit is used to select a second number of patrol beams from the platform-provided beams, confirm a service status of each patrol beam, and classify the patrol beams into serving beams and non-serving patrol beams according to the service status. The beam type converting unit is used to select at least one of a third number of candidate beams, and convert the selected candidate beam into the type of the patrol beams to replace at least one of the non-serving patrol beams.

### BRIEF DESCRIPTION OF THE DRAWINGS

FIG. 1 is a schematic diagram of a communication system 2000 according to an embodiment of the present disclosure.
FIG. 2A is a block diagram of a base station 1000 according to an embodiment of the present disclosure.
FIG. 2B is a schematic diagram illustrating the operation of the antenna array 210 of FIG. 2A.
FIG. 2C is a schematic diagram of the direction D1 of the beam B1 in FIG. 2B.
FIG. 3 is a block diagram of the beam control device 100 of FIG. 2A.
FIG. 4 is a flow diagram of a method for the base station 1000 to execute an automatic beam selecting mechanism.
FIGS. 5A to 5D are schematic diagrams of an embodiment of beam classification and beam type converting of the automatic beam selecting mechanism of the present disclosure.
FIGS. 6A to 6D are schematic diagrams of another embodiment of the beam classification and beam type converting of the automatic beam selecting mechanism of the present disclosure.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

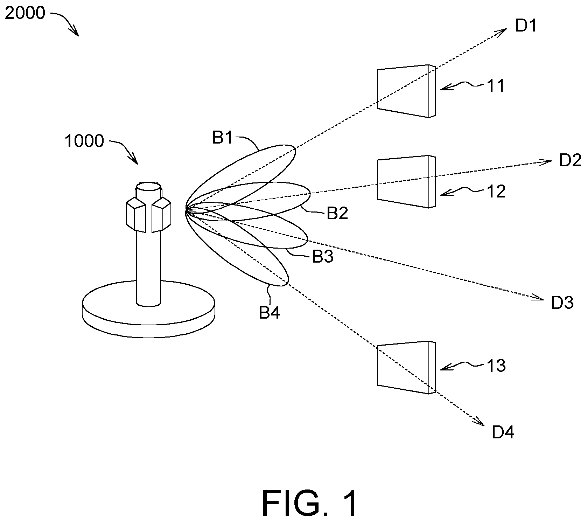

Please refer to FIG. 1, which is a schematic diagram of a communication system 2000 according to an embodiment of the present disclosure. The communication system 2000 is, for example, a fifth generation mobile communication system (abbreviated as a "5G system"), and the communication system 2000 includes a base station 1000 and a number of terminal devices 11-13. The base station 1000 is, for example, a next generation Node Base (gNB) of the 5G system. Each of the terminal devices 11-13 is a user equipment (UE), which is also referred to as a "customer premises equipment (CPE)", such as a mobile computing device used by a user (including a notebook computer, a smart phone, etc.).

The base station 1000 is used to provide communication service to the terminal devices 11-13. The base station 1000 can provide millimeter wave (mmWave) communication service to the terminal devices 11-13 according to a beam-forming mechanism. In the beam-forming mechanism, the transmission signal of the base station 1000 is focused on a number of specific directions to form several corresponding beams, which can enhance the signal strength of the transmission signal of the base station 1000. The terminal devices 11-13 can be aligned with a beam of one direction to receive the transmission signal of the base station 1000, which can reduce the propagation loss of the transmission signal and reduce the interference of environmental factors on the transmission signal.

More specifically, in the beam-forming mechanism, the base station 1000 can focus the transmission signal in directions D1-D4 to form corresponding beams B1-B4. These beams B1-B4 form the range of communication service that the base station 1000 can provide. The terminal device 11 can be aligned with the beam B1 in the direction D1 according to the location of the terminal device 11. The base station 1000 uses the beam B1 to transmit signals and provides communication service to the terminal device 11 through the beam B1. Among the beams B1-B4 provided by the base station 1000, the terminal device 11 can obtain the communication service with the best communication quality, through the beam B1. Similarly, the terminal device 12 can be aligned with the beam B2 in the direction D2 according to the location of the terminal device 12, so as to obtain the communication service with the best communication quality from the base station 1000. The terminal device 13 obtains the communication service with the best communication quality from the base station 1000, through the beam B4 in the direction D4.

In response to different locations of the terminal devices 11-13, or in response to possible movements and hence changing positions of the terminal devices 11-13, the base station 1000 makes replacements for some beams among all available beams to adjust the service range, such that the beam selected by the base station 1000 can cover the current locations of the terminal devices 11-13, and hence the base station 1000 and the terminal devices 11-13 can achieve better communication performance. In the present disclosure, the base station 1000 may execute an automatic beam selecting mechanism to select a beam with a better communication quality. A specific implementation of the automatic beam selecting mechanism will be described in detail in the following paragraphs.

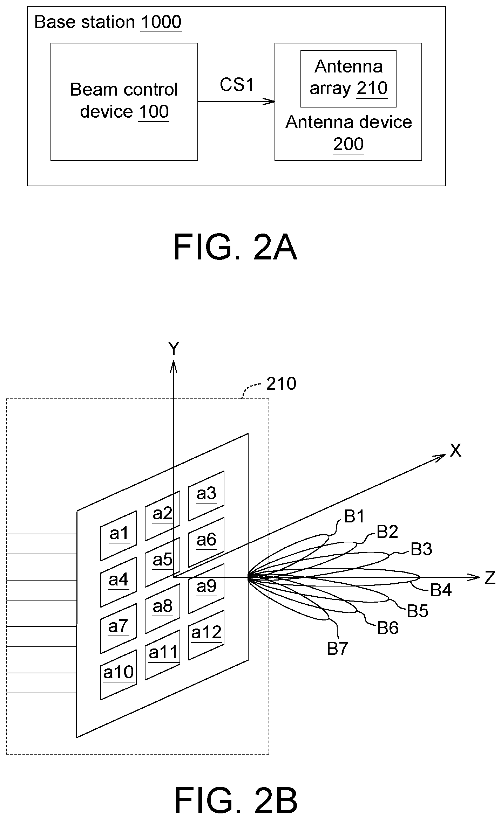

Please refer to FIG. 2A, which is a block diagram of a base station 1000 according to an embodiment of the present disclosure. The base station 1000 at least includes a beam control device 100 and an antenna device 200. The beam control device 100 is, for example, a processor (including a central processing unit, a micro-processor, or a micro-controller, etc.) or a control circuit (including a system-on-chip, an application-specific integrated circuit, or a programmable logic gate array, etc.) disposed in the base station 1000. Furthermore, the antenna device 200 includes an antenna array 210.

The beam control device 100 generates a control signal CS1 and transmits it to the antenna device 200. The beam control device 100 controls the antenna array 210 according to the control signal CS1, such that the antenna array 210 can generate a number of millimeter wave beams according to a beam forming mechanism. Furthermore, the beam control device 100 controls the antenna array 210 according to the control signal CS1 to perform an automatic beam selecting mechanism.

Please refer to FIG. 2B, which is a schematic diagram illustrating the operation of the antenna array 210 of FIG. 2A. The antenna array 210 includes a number of antenna units a1-a12. The antenna units a1-a12 are arranged in a two-dimensional plane defined by a X-axis and a Y-axis. The antenna units a1-a12 generate radio frequency (RF) signals according to their respective weight parameters, so as to form a number of beams B1-B7 in different directions. The beams B1-B7 extend in a three-dimensional space defined by the X-axis, the Y-axis and a Z-axis. For example, the beam B1 extends in a direction D1 in the three-dimensional space.

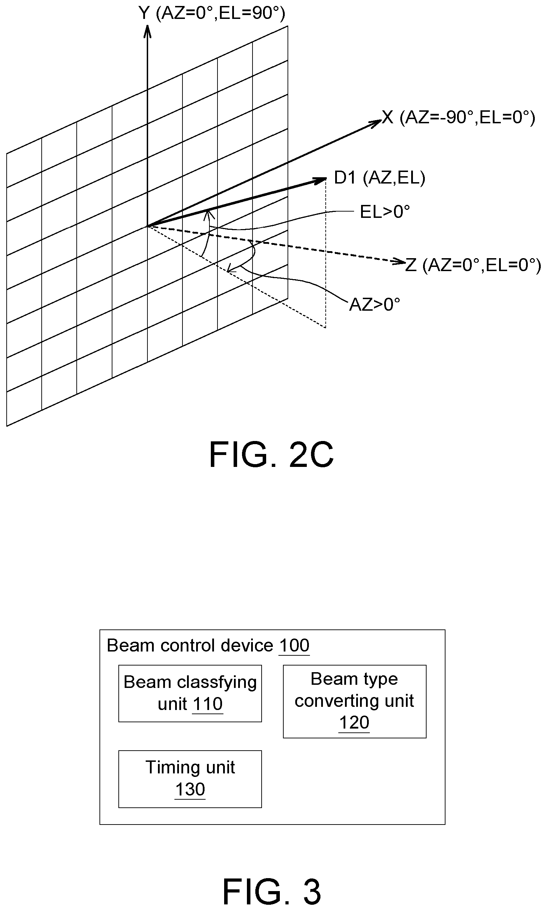

Please also refer to FIG. 2C, which is a schematic diagram of the direction D1 of the beam B1 in FIG. 2B. The direction in the three-dimensional space defined by the X-axis, the Y-axis and the Z-axis is defined by an azimuth angle AZ and an elevation angle EL. For example, the Y-axis has an azimuth angle AZ of 0 degree and an elevation angle EL of 90 degree. The X-axis has an azimuth angle AZ of -90 degree and an elevation angle EL of 0 degree. The Z-axis has an azimuth angle AZ of 0 degree and an elevation angle EL of 0 degree. Furthermore, the direction D1 of the beam B1 of FIG. 2B may be represented as "D1(AZ, EL)" of FIG. 2C, and the azimuth angle AZ and the elevation angle EL of the direction D1 are both greater than 0 degree.

In addition, please refer to Table 1, which lists identification codes of beams corresponding to different azimuth angles AZ and different elevation angles EL. As shown in Table 1, the directions of the beams are defined with an azimuth angle AZ of 15 degrees and an elevation angle EL of 15 degrees as an interval, and 81 beams can be defined in a direction range in which the azimuth angle AZ covers from -60 degree to 60 degree and the elevation angle EL covers from -60 degree to 60 degree. The identification codes of the 81 beams are "11" to "91" respectively.

For example, the beam with the identification code "91" (abbreviated as: beam "91") has an azimuth angle AZ of -60 degree and an elevation angle EL of 60 degree. The beam with the identification code "36" (abbreviated as: beam "36") has an azimuth angle AZ of 60 degree and an elevation angle EL of 15 degrees. The beam with the identification code "11" (abbreviated as: beam "11") has an azimuth angle AZ of 0 degree and an elevation angle EL of 0 degree. In other words, the direction of the beam "11" is substantially parallel to the Z-axis of FIG. 2C.

**Table 1**

| -60° | -45° | -30° | -15° | 0° | 15° | 30° | 45° | 60° | AZ/EL |
|---|---|---|---|---|---|---|---|---|---|
| 91 | 89 | 87 | 85 | 82 | 84 | 86 | 88 | 90 | 60° |
| 72 | 70 | 68 | 66 | 65 | 65 | 67 | 69 | 71 | 45° |
| 55 | 53 | 51 | 49 | 4 | 48 | 50 | 52 | 54 | 30° |
| 37 | 35 | 33 | 31 | 29 | 30 | 32 | 34 | 36 | 15° |
| 19 | 17 | 15 | 13 | 11 | 12 | 14 | 16 | 18 | 0° |
| 28 | 26 | 24 | 22 | 20 | 21 | 23 | 25 | 27 | -15° |
| 46 | 44 | 42 | 40 | 38 | 39 | 41 | 43 | 45 | -30° |
| 64 | 62 | 60 | 58 | 56 | 57 | 59 | 61 | 63 | -45° |
| 82 | 80 | 78 | 76 | 74 | 75 | 77 | 79 | 81 | -60° |

Next, please refer to FIG. 3, which is a block diagram of the beam control device 100 of FIG. 2A. The beam control device 100 includes a beam classifying unit 110, a beam type converting unit 120 and a timing unit 130. Each of the aforementioned beam classifying unit 110, beam type converting unit 120 and timing unit 130 is, for example, a sub-circuit or a software module in the beam control device 100.

The operation of the beam control device 100 is explained taking the beams listed in Table 1 as examples. The total number of beams provided by the platform of the communication system 2000 is "k" (referred to as k "platform-provided beams"). The number k may be referred to as a "first number". Among the 81 beams in the directional range with the azimuth angle AZ being -60 degree to 60 degree and the elevation angle EL being -60 degree to 60 degree, the total number of beams provided by the platform of the communication system 2000 is "61" (i.e., k is equal to 61). In Table 1, the 61 beams provided by the platform of the communication system 2000 are, for example: beam "85" to beam "84" with an azimuth angle AZ of 60 degree, beam "70" to beam "69" with an azimuth angle AZ of 45 degrees, beam "53" to beam "52" with an azimuth angle AZ of 30 degree, and so on, until beam "76" to beam "75" with an azimuth angle AZ of -60 degree.

However, the base station 1000 may not be able to use all of the k platform-provides beams at the same time. Among the k platform-provided beams, the base station 1000 can only use n beams (referred to as n "available beams") at the same time, where n is less than k.

The beam classifying unit 110 classifies the k platform-provided beams into "patrol beams" and "candidate beams". Furthermore, the beam classifying unit 110 may further classify the patrol beams into "serving beams" and "non-serving patrol beams". The patrol beam is defined as: n available beams selected by the base station 1000 from the k platform-provided beams in a current operation cycle. That is, the total number of patrol beams is n, and the number n may be referred to as a "second number". The patrol beams are available for the base station 1000 in the current operation cycle, and the base station 1000 may provide communication service to one or more terminal devices (such as the terminal devices 11, 12 and 13 in FIG. 1) through the n patrol beams.

In addition, the serving beams are defined as: the beams through which the base station 1000 can provides communication service to the terminal device(s) in the current operation cycle, among the n patrol beams. That is, the total number of serving beams is less than n and greater than or equal to zero. On the other hand, the non-serving patrol beams are defined as: the beams for which the base station 1000 does not provide communication service to the terminal device(s) in the current operation cycle, among the n patrol beams (i.e., the patrol beams that are not the serving beams). Furthermore, the candidate beams are defined as: the other (k-n) beams that are not selected as patrol beams, among the k platform-provided beams. That is, the total number of candidate beams is (k-n), and the number (k-n) may be referred to as a "third number".

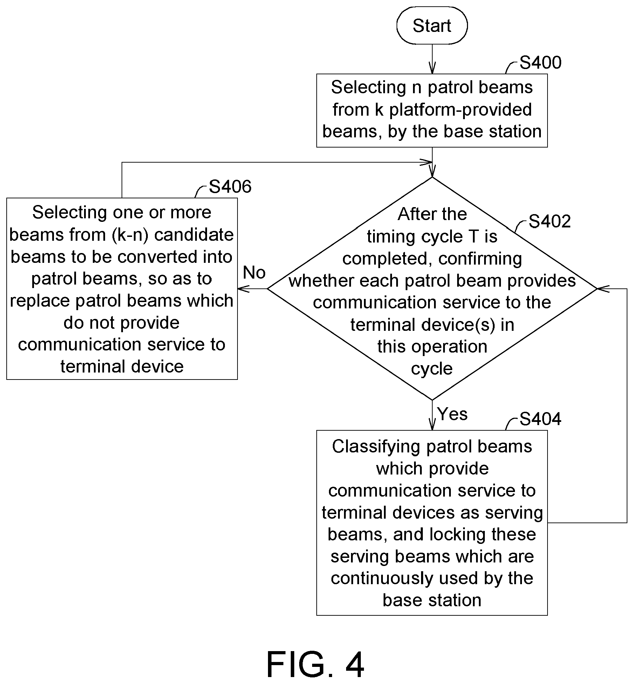

The detailed operations of the beam classifying unit 110, the beam type converting unit 120 and the timing unit 130 are described below with reference to FIG. 4.

Please refer to FIG. 4, which is a flow diagram of a method for the base station 1000 to execute an automatic beam selecting mechanism. The method illustrated in FIG. 4 is executed by the beam classifying unit 110, the beam type converting unit 120 and the timing unit 130 in FIG. 3. First, step S400 is executed: in the initial operation stage of the base station 1000, the beam classifying unit 110 selects n patrol beams from k platform-provided beams. On the other hand, the beam classifying unit 110 classifies the other (k-n) beams, which are not selected as patrol beams, as candidate beams.

Then, step S402 is executed: the timing unit 130 performs timing according to a timing cycle T. After the timing cycle T of the timing unit 130 is completed, the beam classifying unit 110 confirms the service status of each of the n patrol beams, so as to confirm whether these patrol beams provide communication service to the terminal device(s) in this operation cycle. The timing cycle T of the timing unit 130 is equal to the length of an operation cycle of the base station 1000. For example, after a timing cycle T, the base station 1000 enters a next operation cycle from a current operation cycle. After another timing cycle T, the base station 1000 enters a further next operation cycle, and so on.

If the confirmation result of step S402 is that, one or more of the n patrol beams indeed "provide communication service" to the terminal device(s), step S404 is executed: the beam classifying unit 110 classifies one or more patrol beams that provide communication service to the terminal device(s) as serving beams. The base station 1000 continuously uses these serving beams, and locks these serving beams to provide communication service to terminal device(s). After step S404, step S402 is executed again: after the next timing cycle T of the timing unit 130 is completed, the beam classifying unit 110 confirms whether the patrol beams provide communication service to the terminal device(s) in the next operation cycle.

On the other hand, if the confirmation result of step S402 is: one or more of the n patrol beams "do not provide communication service" to the terminal device(s), then step S406 is executed: the beam classifying unit 110 further classifies one or more patrol beams that "do not provide communication service" as non-serving patrol beams. Furthermore, the beam type converting unit 120 selects one or more beams from the (k-n) candidate beams for performing type conversion, so as to convert the selected one or more candidate beams into patrol beams, which are taken to replace one or more non-serving patrol beams. In one example, the beam type converting unit 120 randomly selects one or more beams from (k-n) candidate beams to convert into patrol beams, according to a random selecting mechanism.

Furthermore, the beam type converting unit 120 performs type conversion on one or more of the above-mentioned non-serving patrol beams to convert them into candidate beams. In other words, the beam type converting unit 120 performs type conversion to exchange the types of one or more of the non-serving patrol beams with the selected one or more candidate beams. After step S404, step S402 is executed again: in the next operation cycle, it is confirmed whether the patrol beams provide communication service to the terminal device(s).

After executing step S402 and step S406 for several times, the base station 1000 sequentially selects different candidate beams to be converted into patrol beams in several operation cycles. After these operation cycles, if the base station 1000 has selected all the candidate beams, it returns to an "initial beam" for selection. The "initial beam" is, for example, the beam "11" in Table 1 with both the azimuth angle AZ and the elevation angle EL are 0 degree. The beam "11" is located at a central position of Table 1, and the direction of the beam "11" is substantially parallel to the Z-axis of FIG. 2C.

In another example, the base station 1000 also performs a beam switching mechanism for the terminal device(s) provided with communication service, so as to ensure the communication quality of the communication service. For example, the base station 1000 originally provides communication service to the terminal device(s) through one of the serving beams (referred to as an "original serving beam"). When the base station 1000 determines that another beam (referred to as a "new beam") has a better signal quality, the base station 1000 can execute a beam switching mechanism to switch to the new beam to provide communication service to the terminal device(s). At this time, the beam type converting unit 110 converts the new beam into a serving beam, so that the new beam continues to be used by the base station 1000. In contrast, the beam type converting unit 110 converts the original serving beam from the type of serving beam to the type of patrol beam. Since the patrol beam, which is converted from the original serving beam, does not provide communication service to the terminal device(s), after a timing cycle T of the timing unit 130 is completed, the beam type converting unit 120 selects one of the candidate beams and converts it into patrol beam, so as to replace the patrol beam converted from the original serving beam. Furthermore, the patrol beam converted from the original serving beam is converted into the candidate beam.

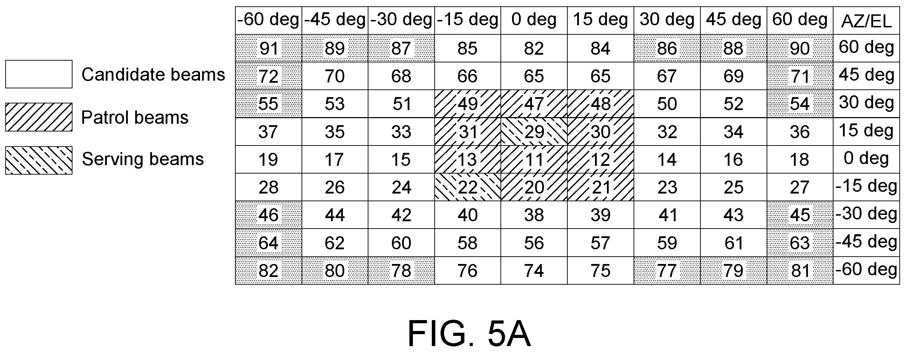

FIGS. 5A to 5D are schematic diagrams of an embodiment of beam classification and beam type converting of the automatic beam selecting mechanism of the present disclosure. Please refer to FIG. 5A, in a first operation cycle of the initial operation phase of the base station 1000, the base station 1000 selects n patrol beams (n=12) from k platform-provided beams (k=61). In this embodiment, the directional range for selecting n patrol beams is: an area range spreading from the central position (the central position has the azimuth angle AZ of 0 degree and the elevation angle EL of 0 degree) to the periphery, for example, 12 patrol beams with identification codes of "49", "47", "48", "31", "29", "30", "13", "11", "12", "22", "20" and "21". On the other hand, the other (k-n) beams that are not selected as patrol beams in the current operation cycle (i.e., the first operation cycle) of the base station 1000 are classified as candidate beams. That is, the other 49 beams outside the directional range of the selected 12 patrol beams are classified as candidate beams.

After the timing cycle T of the first operation cycle is completed, the base station 1000 confirms the service status of each of the 12 patrol beams, so as to confirm whether these patrol beams provide communication service to the terminal device(s) in the first operation cycle. The confirmation result indicates that, beam "29" and beam "22" indeed provide communication service to the terminal device(s), and hence the base station 1000 classifies beam "29" and beam "22" as serving beams, where the base station 1000 continuously uses and locks these serving beams to provide communication service to terminal device(s).

On the other hand, the confirmation result of the service status of the patrol beams indicates that, other 10 patrol beams than beam "29" and beam "22" with the type of serving beam did not provide communication service to the terminal device(s) in the first operation cycle. These 10 patrol beams are classified as non-service patrol beams. Some of the non-serving patrol beams will be replaced by candidate beams.

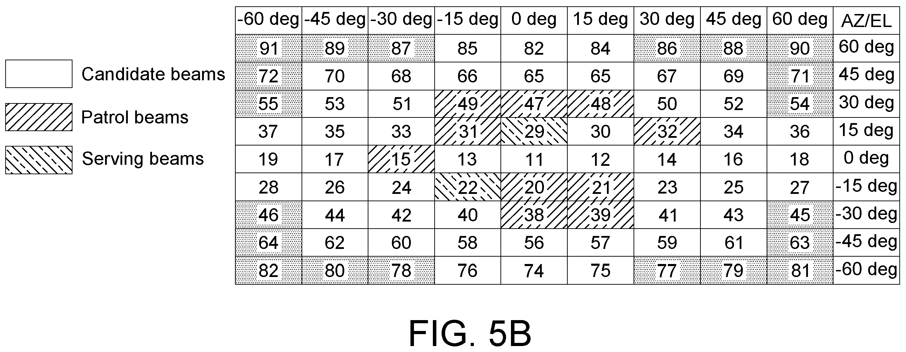

Referring to FIG. 5B, the base station 1000 randomly selects some beams out of the 49 candidate beams to replace some of the 10 non-serving patrol beams. For example, 4 candidate beams (i.e., beams "32", "15", "38" and "39") are randomly selected and converted into patrol beams, so as to replace 4 non-serving patrol beams (i.e., beams "30", "13", "11" and "12"). The beams "30", "13", "11" and "12" of the original non-serving patrol beams are converted into candidate beams.

After the timing cycle T of the first operation cycle is completed, the type of patrol beams and the type of candidate beams are converted, and the new patrol beam formed after the conversion spreads toward the periphery with respect to the center position.

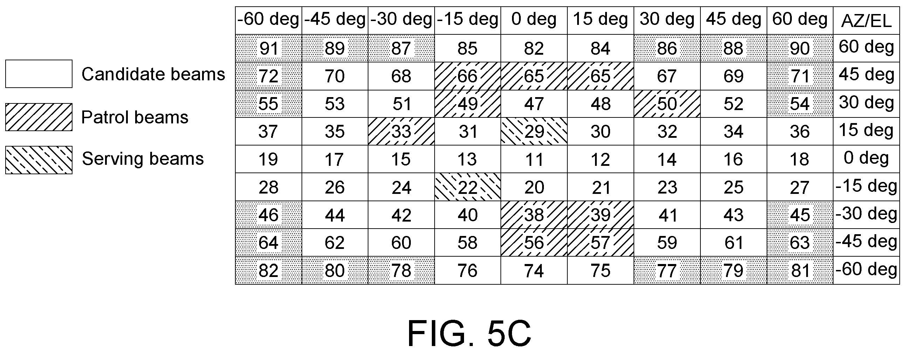

Next, referring to FIG. 5C, after the timing cycle T of the second operation cycle is completed, the base station 1000 confirms the service status of the new patrol beam, which type is converted, after the previous operation cycle (i.e., the first operation cycle). The confirmation result indicates that beam "29" and beam "22" are still providing communication service to the terminal device(s), and hence beam "29" and beam "22" are continuously locked to provide communication service to the terminal device(s).

On the other hand, 4 beams (i.e., beams "50", "33", "56" and "57") are randomly selected from the candidate beams and converted into patrol beams, so as to replace 4 non-serving patrol beams (i.e., beams "32", "15", "20" and "21"). The beams "32", "15", "20" and "21" of the type of original non-serving patrol beam are converted into the candidate beams.

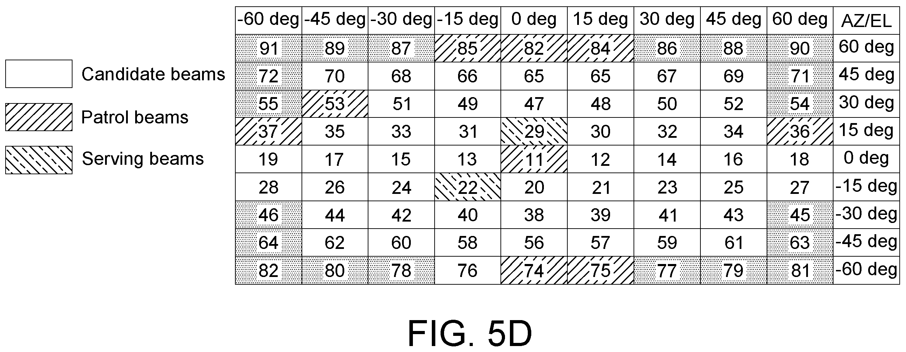

According to the above-mentioned implementation, after a number of operation cycles of the automatic beam selecting mechanism of the base station 1000, after several times of type conversions of patrol beams and candidate beams, the resulted new patrol beams gradually spread toward the periphery and thereby spread to the boundary position (i.e., the positions where the azimuth angle AZ is 60 degree or -60 degree, and the elevation angle EL is 60 degree or -60 degree). For example, in the example of FIG. 5D, beams "85", "82", "84", "37", "36", "74" and "75" among the new patrol beams have spread to the boundary positions, indicating that all 61 platform-provided beams have been selected (where each of the 61 platform-provided beams has been fairly selected). Next, starting again from the center position to select the beam "11" at the center position as the patrol beam.

In the automatic beam selecting mechanism of the embodiments of FIGS. 5A to 5D, the patrol beam is selected based on a direction range that spreads from a central position (where the azimuth angle AZ is 0 degree and the elevation angle EL is 0 degree) toward the periphery. In other embodiments, the patrol beam may also be selected according to different directional ranges, as will be described below.

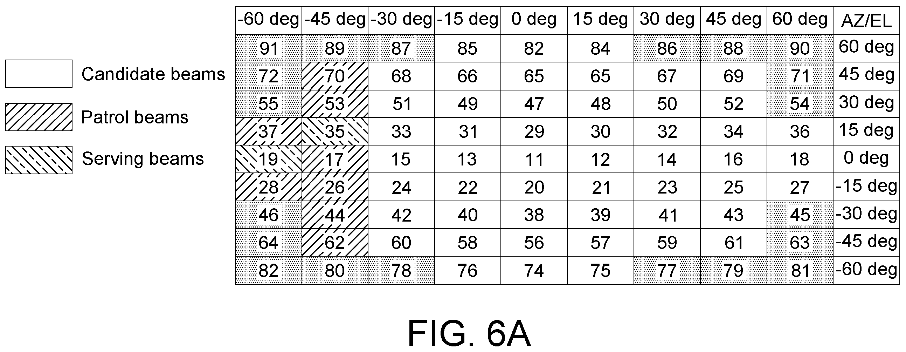

FIGS. 6A to 6D are schematic diagrams of another embodiment of the beam classification and beam type converting of the automatic beam selecting mechanism of the present disclosure. In the embodiments of FIGS. 6A to 6D, the patrol beams are selected based on a direction range which is moved from a left boundary position to the right, and gradually moved to the right boundary position. The left boundary position may be referred to as a "first side boundary position", which is a boundary position corresponding to a direction where the azimuth angle AZ is -60 degree. The right boundary position may be referred to as a "second side boundary position", which is a boundary position corresponding to a direction where the azimuth angle AZ is 60 degree. Please refer to FIG. 6A first, in the first operation cycle of the initial operation stage of the base station 1000, the base station 1000 selects n patrol beams (n = 10) from the left boundary position of the k platform-provided beams (k = 61), for example, 10 patrol beams with identification codes "37", "19", "28", "70", "53", "35", "17", "26", "44" and "62". On the other hand, the other (k-n) beams that are not selected as patrol beams are classified as candidate beams. That is, there are 52 candidate beams in the area, which spreads to the right) outside the range of the 10 patrol beams.

After the timing cycle T of the first operation cycle is completed, the service status of the 10 patrol beams is confirmed, so as to confirm whether communication service are provided to the terminal device. The confirmation result indicates that beam "35" and beam "19" provide communication service to the terminal device, and hence beam "35" and beam "19" are classified as serving beams, which are locked and continuously used to provide communication service to the terminal device. On the other hand, the 8 patrol beams other than beam "35" and beam "19" (i.e., beams "37", "28", "70", "53", "17", "26", "44" and "62") did not provide communication service to the terminal devices in the first operation cycle, therefore they are classified as non-serving patrol beams. Some of the non-serving patrol beams will be replaced by candidate beams.

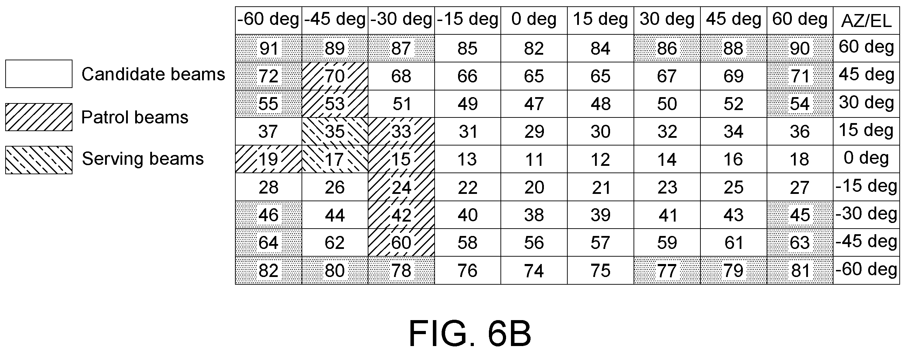

Referring to FIG. 6B, the base station 1000 selects 5 candidate beams (i.e., beams "33", "15", "24", "42" and "60") from positions nearby the left side within the range of 52 candidate beams, and converts them into patrol beams to replace 5 beams (i.e., beams "37", "28", "26", "44" and "62") of the aforementioned 8 non-serving patrol beams. After the timing cycle T of the first operation cycle is completed, the types of patrol beam and the candidate beam are converted, and the resulted new patrol beams move to the right.

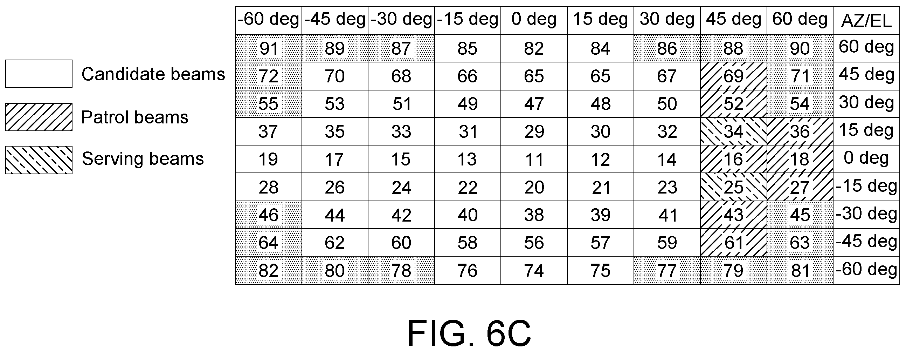

According to the above-mentioned implementation, after a number of operation cycles of the automatic beam selecting mechanism of the base station 1000, after several times of type conversions of the patrol beams and the candidate beams, the resulted new patrol beams gradually moves to the right and may arrive the right boundary position (i.e., the position where the azimuth angle AZ is 60 degree). As shown in FIG. 6C, the patrol beams include beams "69," "52," "34," "16," "25," "43," "61," "36," "18," and "27" adjacent to the right boundary position.

In addition, the base station 1000 can execute a beam switching mechanism. For example, when the base station 1000 determines that the other two beams "34" and "25" (referred to as "new beams") have better signal quality, the base station 1000 switches operations from the two original serving beams (beams "35" and "19") in FIG. 6B to 2 new beams (beams "34" and "25") respectively, and the base station 1000 provides communication service to the terminal device through the new beams.

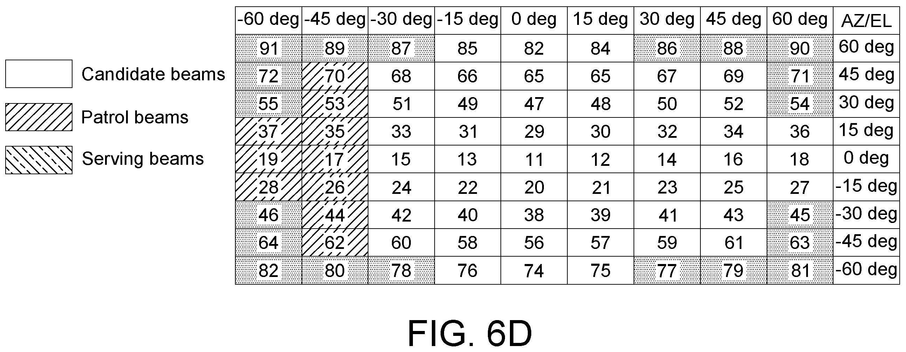

The range of the patrol beams in the example of FIG. 6C has moved to the right boundary position, indicating that all 61 platform-provided beams have been fairly selected. In the next operation cycle, the selection can be restarted from the left boundary position. As shown in FIG. 6D, beams "37", "19", "28", "70", "53", "35", "17", "26", "44" and "62" are reselected as 10 patrol beams.

In the embodiments of FIG. 6A to FIG. 6D, the selection range of the patrol beams can also move from the right boundary position to the left, and gradually move to arrive the left boundary position. Alternatively, the selection range of the patrol beams may move downward from the upper boundary position, and gradually move to arrive the lower boundary position (or vice versa, may move upward from the lower boundary position, and finally arrive the upper boundary position). The upper boundary position is a boundary position corresponding to a direction having an elevation angle EL of 60 degree, and the lower boundary position is a boundary position corresponding to a direction having an elevation angle EL of -60 degree.

In summary, in the automatic beam selecting mechanism executed by the base station 1000, the k platform-provided beams are classified into n patrol beams and (k-n) candidate beams. In each operation cycle, when the timing cycle T is completed, the service status of n patrol beams is confirmed, so as to further classify into serving beams and non-serving patrol beams. And, one or more beams are selected from the candidate beams to replace one or more non-serving patrol beams. After a number of operation cycles, the base station 1000 scans and selects the candidate beams one by one, and can fairly scan and select all k platform-provided beams. Accordingly, for different locations of the terminal devices at different time points, the base station 1000 can adaptively select the most suitable beam(s) to provide communication service to the terminal device(s), so as to achieve the maximum communication performance between the base station 1000 and the terminal device(s).

It will be apparent to those skilled in the art that various modifications and variations can be made to the disclosed embodiments. It is intended that the specification and examples be considered as exemplars only, with a true scope of the disclosure being indicated by the following claims and their equivalents.

## Claims

1. A beam control device (100), which is capable of executing an automatic beam selecting mechanism and used to control a first number of platform-provided beams generated by an antenna array (210), the platform-provided beams are used to provide communication service to a plurality of terminal devices (11), (12) and (13), **characterized in that** the beam control device (100) comprising:
a beam classifying unit (110), for selecting a second number of patrol beams from the platform-provided beams, confirming a service status of each of the patrol beams, and classifying the patrol beams into a plurality of serving beams and a plurality of non-serving patrol beams according to the service status; and
a beam type converting unit (120), for selecting at least one from a third number of candidate beams, and converting the selected at least one candidate beam into the type of the patrol beams to replace at least one of the non-serving patrol beams.

2. The beam control device (100) of claim 1, wherein the antenna array (210) is included in an antenna device (200), and the antenna device (200) and the beam control device (100) are arranged in a base station (1000) which is a next generation Node Base (gNB) of a 5G mobile communication system.

3. The beam control device (100) of claim 1, wherein a sum of the second number for the patrol beams and the third number for the candidate beams is equal to the first number for the platform-provided beams.

4. The beam control device (100) of claim 1, wherein when the service status of one of the patrol beams is confirmed as "the patrol beam provides communication service to at least one of the terminal devices (11), (12) and (13)", the patrol beam is classified as one of the serving beams.

5. The beam control device (100) of claim 4, wherein the serving beams are locked to continuously provide communication service to at least one of the terminal devices (11), (12) and (13).

6. The beam control device (100) of claim 1, wherein when the service status of one of the patrol beams is confirmed as "the patrol beam does not provide communication service to at least one of the terminal devices (11), (12) and (13)", the patrol beam is classified as one of the non-serving patrol beams.

7. The beam control device (100) of claim 6, wherein the beam type converting unit (120) converts the at least one non-serving patrol beam, which is replaced by the at least one candidate beam, into the type of the candidate beams.

8. The beam control device (100) of claim 1, further comprising:
a timing unit (130), for timing according to a timing cycle,
wherein when the timing cycle is completed, the beam classifying unit (110) confirms the service status of each of the patrol beams.

9. The beam control device (100) of claim 1, wherein the beam type converting unit (120) selects at least one from the candidate beams according to a random selecting mechanism to replace at least one of the non-serving patrol beams.

10. The beam control device (100) of claim 1, wherein the beam classifying unit (110) selects the patrol beams from the platform-provided beams according to a directional range, wherein the directional range is defined by an azimuth angle (AZ) and an elevation angle (EL).

11. The beam control device (100) of claim 10, wherein the directional range gradually spreads from a central position to a periphery, and the central position corresponds to a direction having the azimuth angle (AZ) of 0 degree and the elevation angle (EL) of 0 degree.

12. The beam control device (100) of claim 10, wherein the directional range gradually moves from a first side boundary position to a second side boundary position, in which the first side boundary position is one of a left side boundary position, a right side boundary position, an upper side boundary position and a lower side boundary position, and the second side boundary position is one of the right side boundary position, the left side boundary position, the lower side boundary position and the upper side boundary position which is opposite to the first side boundary position.
